# EUROPÄISCHE PATENTSCHRIFT

(11) **EP 2 522 964 B1**
(45) Veröffentlichungstag und Bekanntmachung des Hinweises auf die Patenterteilung: **26.07.2017**
(21) Anmeldenummer: 12167094.7
(22) Anmeldetag: 08.05.2012
(51) Int. Cl.: G01G 23/10, G01G 19/387, G06F 17/00

(54) **Signalverarbeitungsverfahren, Vorrichtung zur Signalverarbeitung und Waage mit Vorrichtung zur Signalverarbeitung**
Signal processing method, device for signal processing and scale with signal processing device
Procédé de traitement de signal, dispositif de traitement de signal et balance équipée du dispositif de traitement de signal

(30) Priorität: 10.05.2011 DE 102011075577
(43) Veröffentlichungstag der Anmeldung: 14.11.2012
(73) Patentinhaber: Multipond Wägetechnik GmbH, 84478 Waldkraiburg (DE)
(72) Erfinder: Zeck, Wolfram, 84453 Mühldorf (DE)
(74) Vertreter: Prüfer & Partner mbB Patentanwälte · Rechtsanwälte

(56) Entgegenhaltungen:
- EP-A1- 2 148 179
- WO-A1-03/010497
- US-A1- 2002 185 318

## Beschreibung

Die vorliegende Erfindung bezieht sich auf ein Signalverarbeitungsverfahren, eine Vorrichtung zur Signalverarbeitung und eine Waage mit Vorrichtung zur Signalverarbeitung.

Eine der häufigsten Aufgaben der Messtechnik ist es, speziell bei Messwerten die Schwankungen unterlegen sind, Messergebnisse möglichst genau und/oder möglichst schnell zu erhalten. Derartige Schwankungen können beispielsweise durch die Schwankung des Messwertes selbst durch eine nicht konstante Messgröße, den Übergang der Messgröße zwischen zwei konstanten Pegeln, überlagertes Rauschen der Messanordnung oder auch durch dem Messwert überlagerte Störgrößen, wie periodische Störgrößen (Schwingungen; Schwebungen; Auswirkungen von systemfremden Größen) oder wie aperiodische Störgrößen (Auswirkungen von Beschleunigungen, Impulsen, Ladungen; Auswirkungen von Umwelteinflüssen) verursacht werden.

Das Vorhandensein von Störgrößen führt zu einer ungenauen Messung und/oder zu einer längeren Messzeit bis zum Erreichen einer bestimmten Genauigkeit. Um den Einfluss der Störgrößen zu reduzieren kommen in allen Messsystemen analoge oder digitale Filter zum Einsatz. Analoge Filter wirken direkt auf die Messgröße oder auf die physikalische Größe, in die die Messgröße gewandelt wurde. Digitale Filter verarbeiten ein digitalisiertes Messsignal.

Alle angewendeten Filter beeinflussen das ursprüngliche Messsignal in einer bestimmten Art und Weise. Wichtig hierbei sind eine geringe Verfälschung der Messgröße im Messbereich, eine starke Unterdrückung der Störgrößen im Messbereich, ein stabiles Verhalten des Messverfahrens in allen zu erwartenden Situationen, genaue Messresultate sowie schnelle Messungen.

Ein bekanntes Verfahren zur Unterdrückung von Störgrößen bei der Messung von statischen Signalen ist die Anwendung von Tiefpass-Filtern. Diese lassen die niederfrequenten Anteile des Messsignals bis zur Grenzfrequenz des Filters unverändert passieren, während sie die höherfrequenten Anteile dämpfen. Das führt zu einem, von Störgrößen befreiten, gefilterten Messsignal, welches ein genaueres Messergebnis liefert bzw. generell die Ermittlung eines Messergebnisses erlaubt. Diese Vorteile erkauft man sich durch eine geringere Reaktionsgeschwindigkeit bei Änderungen des Messsignals und längeren Einschwingzeiten bis zum Erreichen einer bestimmten Messgenauigkeit.

Bei dynamischen Messungen bzgl. Messgrößen die häufig zwischen unterschiedlichen Werten schwanken, führen die Tiefpass-Filter zu einer Verzögerung des Messresultates und hinken dem eigentlich gemessenen Signal hinterher.

Eine bekannte Möglichkeit zur Unterdrückung von Störgrößen ist die Bildung des Mittelwertes aus mehreren aufeinander folgenden Messwerten. So wirken sich die Schwankungen der einzelnen Werte nicht mehr unmittelbar auf das Messergebnis aus; das Filterausgangssignal ist ruhiger. Durch die Bildung eines mitlaufenden Mittelwertes über die letzten Messungen kann diese Methode auf einen kontinuierlichen Strom von Messdaten angewendet werden. Dadurch werden alle Störgrößen abgeschwächt und bestimmte periodische Störgrößen sogar gänzlich unterdrückt. Der Nachteil dieses Verfahrens ist es, dass mindestens eine Periode der Störgröße vergehen muss, um ein brauchbares Ergebnis zu erhalten, was bei niedrigen Frequenzen sehr lange dauern kann. Weiterhin ist die Dämpfung gering, wenn die Schwingung nicht streng periodisch ist, mehrere Frequenzen überlagert sind oder die Anzahl der gemittelten Werte nicht einem Vielfachen der Periode entspricht. Eine weitere Methode zur Unterdrückung von Störungen ist die Verwendung eines Digitalfilters. Diese können rekursiv ("Rekursiv-Filter" - RF), mit Rückkopplung oder nicht rekursiv ("Nicht-Rekursiv-Filter" - NRF) ohne Rückkopplung sein. Eine andere Klassifizierung unterscheidet zwischen Filtern mit "Finite Impulse Response" (FIR) und Filtern mit "Infinite Impulse Response" (IIR). Allgemein ist es so, dass die FIR-Filter eine höhere Stabilität und die IIR-Filter eine höhere Filtergüte (höherer Gütefaktor Q) aufweisen. Je nach Übertragungsfunktion und Verhalten kommen beispielsweise Butterworth-, Bessel-, Tschebyscheff- oder Cauer - Filter zum Einsatz. Alle diese Filter sind jedoch bzgl. der Reaktionsschnelligkeit oder bzgl. der Toleranz gegenüber unterschiedlich großen Störungen nachteilig.

Nächstliegender Stand der Technik ist insbesondere durch die Schriften US 2002/0185318 A1, EP 2 148 179 A1 und WO 03/010497 A1 gegeben. Es ist daher die Aufgabe der vorliegenden Erfindung, ein Signalverarbeitungsverfahren bzw. eine Vorrichtung zur Signalverarbeitung bereitzustellen, durch das bzw. durch die eine schnelle Reaktion auf Änderungen des Eingangsignals erfolgt, die Zeit bis zum Vorliegen eines endgültigen Messresultats verkürzt und die Stabilität des Messergebnisses nach der Ersterfassung des Messwerts verbessert wird.
Die Aufgabe wird gelöst durch ein Signalverarbeitungsverfahren gemäß Anspruch 1, eine Vorrichtung zur Signalverarbeitung gemäß Anspruch 15 sowie eine Waage mit einer Vorrichtung zur Signalverarbeitung gemäß Anspruch 16. Weiterbildungen der Erfindung sind jeweils in den Unteransprüchen angegeben.

Durch das erfindungsgemäße Verfahren bzw. die erfindungsgemäße Vorrichtung ist bzgl. des Messsignals ein schnelles Einschwingen beim Messen möglich. Weiterhin ist eine höhere Immunität gegenüber periodischen und aperiodischen Störungen gewährleistet. Durch die erfindungsgemäße Signalverarbeitung wird das Messen außerdem unter schwierigen Bedingungen möglich.

Auch wird eine lernfähige Korrekturfunktion für dynamisches Messen verwirklicht.

Ferner können gleichzeitig verschiedene Methoden zur Stabilitätsbeurteilung zum Einsatz kommen und so gültige Messergebnisse auch bei Vorhandensein von großen Störeinflüssen erzielt werden.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1a: einen Einschwingvorgang gemäß einer ersten Ausführungsform mit einem Vorfilter,
- Fig. 1b: den Einschwingvorgang gemäß der ersten Ausführungsform mit zwei Filtern,
- Fig. 2: einen Einschwingvorgang gemäß einer zweiten Ausführungsform,
- Fig. 3: einen mittleren Verlauf eines Erfassungs-fehlers.

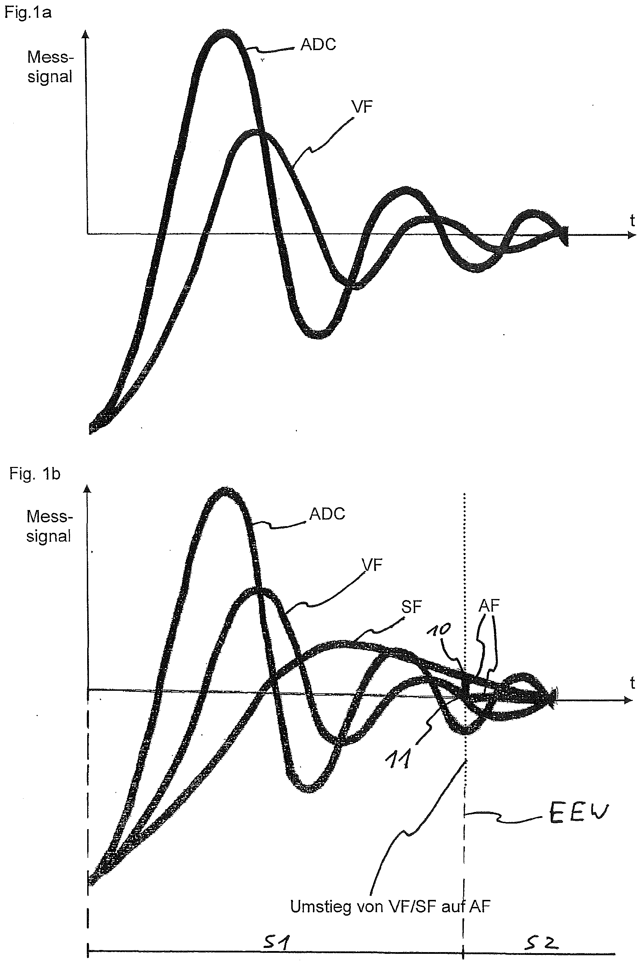

Die Erfindung wird anhand einer Wägeeinrichtung beschrieben, die eine erfindungsgemäße Vorrichtung zur Signalverarbeitung aufweist, die wiederum das erfindungsgemäße Verfahren zur Signalverarbeitung ausführt. Die in den Fig. 1a bis 3 gezeigten Schaubilder beziehen sich auf ein Messsignal (Y-Achse), das zunächst abhängig vom Gewicht des zu wiegenden Guts als Wägesignal gemessen wird und als elektrisches Signal (U; I) abgebildet wird, und über die Zeit t (x-Achse) aufgetragen wird. Bzgl. der Y-Achse stellt der Nullpunkt den realen Messwert (t → ∞) dar.

Im Folgenden wird mit Bezug auf Fig. 1a und Fig. 1b eine erste Ausführungsform der vorliegenden Erfindung beschrieben.

Fig. 1a zeigt ein Messsignal ADC, welches zwischen zwei Pegeln schwankt und beim Einschwingen ein Überschwingen zeigt. Das sinusförmige Signal schießt also bzgl. Fig. 1a von oben oder von unten kommend mehrfach über die t-Achse hinaus und nähert sich dieser zeitabhängig an. Dieser Überschwinger entsteht durch den Aufprallimpuls des zu wiegenden Guts bzgl. des Wägesensors, der das System zum Schwingen anregt. Die Schwingung weist die systemeigene Frequenz (Eigenfrequenz bzw. Resonanzfrequenz) auf und überlagert den zu messenden Wert (statischen Messwert). Um das Messsignal ADC für eine Verwertbarkeit zu glätten, wird zunächst in einer ersten Zeitspanne S1 ein schwaches schnelles Digitalfilter als Vorfilter eingesetzt, wodurch das Messsignal ADC in ein Vorfilterausgangssignal VF gewandelt wird (siehe Fig. la). Hierfür wird das analoge Messsignal ADC zuvor digitalisiert. Beispielsweise kann ein Tiefpassfilter als Vorfilter mit höherer Grenzfrequenz bzw. Eckfrequenz und/oder niedriger Ordnung verwendet werden. Die Ordnung eines Filters beschreibt die Verstärkungsabnahme, also die Dämpfung sowie die Flankensteilheit von Frequenzen oberhalb oder unterhalb der jeweiligen Grenzfrequenz des Filters. Ein schwaches Filter hat eine hohe Eckfrequenz und/oder eine niedrige Ordnung, ein starkes Filter eine niedrigere Eckfrequenz und/oder eine höhere Ordnung. Digitale Filter sind Algorithmen, die unter Verwendung bestimmter Filterkoeffizienten ein Filterverhalten nachbilden. Die Filterausgangssignale werden berechnet. Die Filterkoeffizienten eines starken Filters unterscheiden sich von den Filterkoeffizienten schwacher Filter. Das Vorfilterausgangssignal VF schwankt wieder zwischen zwei Pegeln, ist allerdings bzgl. der Amplitude abgeschwächt.

Ein erstes Stillstandskriterium SK1 überwacht den Verlauf des Vorfilterausgangssignals VF und entscheidet, ab wann ein gültiges - ggf. weiterzuverarbeitendes - Messsignal vorliegt. Als erstes Stillstandskriterium SK1 kann beispielsweise ein so genannter Gut-Zähler dienen, der immer dann mit einem bestimmten Inkrement hochzählt, also inkrementiert, wenn die Differenz zwischen dem aktuellen Messsignal-Wert und einem vorhergehenden Messsignal-Wert kleiner ist als ein festgelegter erster Sockelbetrag. Bei nicht erfüllter Bedingung, also wenn die Differenz zwischen dem aktuellen Messsignal-Wert und einem vorhergehenden Messsignal-Wert größer ist als der erste Sockelbetrag, zählt der Gut-Zähler mit einem Dekrement zurück bzw. dekrementiert oder setzt den Gut-Zähler auf Null. Erreicht der Gut-Zähler einen festgelegten Schwellenwert, wird das gemessene Signal als gültig erklärt. Zu diesem Zeitpunkt liegt dann ein Ersterfassungswert EEW vor. Die erste Zeitspanne S1 endet und eine zweite Zeitspanne S2 beginnt.

Fig. 1b zeigt wie in Fig. 1a das Messsignal ADC und das Vorfilterausgangssignal VF sowie ein Starkfilterausgangssignal SF. Beide Filter, also das schwache, schnelle und unruhige Vorfilter (erstes Filter) und das langsamere und ruhigere Starkfilter (zweites Filter) laufen parallel, werden also berechnet und liefern die Ausgangssignale VF und SF. Weiterhin ist ein adaptives drittes Filter, das ein Adaptivfilterausgangssignal AF erzeugt, vorgesehen, das in der zweiten Zeitspanne S2 filtert. Dieses adaptive Filter gibt nach dem Erreichen eines zweiten Stillstandskriteriums SK2 einen endgültigen Messwert aus. Zu Beginn der zweiten Zeitspanne S2, unmittelbar nach der Erreichung des Schwellenwerts (des Stillstandskriteriums) steigt das adaptive Filter also vom Vorfilter auf das Starkfilter um, um eine höhere Stabilität gegenüber dem noch nicht abgeklungenen Einschwingvorgang zu erreichen. Da das Vorfilterausgangssignal VF den Verlauf des Messsignal-Werts zeitnah verfolgt, wird die Ersterfassung erfolgen, sobald das Vorfilterausgangssignal VF in den Bereich des neuen statischen Pegels (also des neuen zu messenden Messwerts) gelangt. Danach muss noch die Restenergie des Einschwingvorganges aufgebraucht werden, was sich durch Schwankungen des Messsignals ADC im Bereich des neuen statischen Pegels bemerkbar macht. Durch den Umstieg auf das zweite Filter werden diese Schwankungen wirksam gedämpft und das zweite Stillstandskriterium SK2 kann einen gültigen Wert signalisieren. Das Adaptivfilterausgangssignal AF stellt dann den für korrekt erklärten Messwert dar.

Eine erste Möglichkeit für den Verlauf des adaptiven Filters besteht darin, dass er in der ersten Zeitspanne S1 identisch ist mit dem starken Filter, nach Erreichen des Ersterfassungswertes EEW, also zu Beginn der zweiten Zeitspanne S2, die Zwischenwerte der Filterberechnung gemäß dem Starkfilter jedoch überschrieben werden mit den der Ersterfassung entsprechenden Werten, das adaptive Filter also einen Umstieg vollzogen hat und ab diesem Zeitpunkt, im Verlauf der zweiten Zeitspanne S2 als starkes Filter weiterarbeitet. Für diesen Fall geht in Fig. 1b das Starkfilterausgangssignal SF als Knick 10 erkennbar in das Adaptivfilterausgangssignal AF über, das auf der T-Achse verläuft und welches als korrekter Messwert angesehen wird.

Eine weitere Möglichkeit für den Verlauf des adaptiven Filters besteht darin, dass er in der ersten Zeitspanne S1 identisch ist mit dem Vorfilter. Nach Erreichen des Ersterfassungswertes EEW, also ab Beginn der zweiten Zeitspanne S2, wird die weitere Filterberechnung für das adaptive Filter mit den Filterkoeffizienten des Starkfilters vorgenommen. In diesem Fall wirkt sich der Umstieg auf das Vorfilterausgangssignal VF aus und hat, wie in Fig. 1b zu sehen ist, einen Knick 11 zur Folge. Das Adaptivfilterausgangssignal AF verläuft hier ebenfalls auf der t-Achse und wird als korrekter Messwert angesehen.

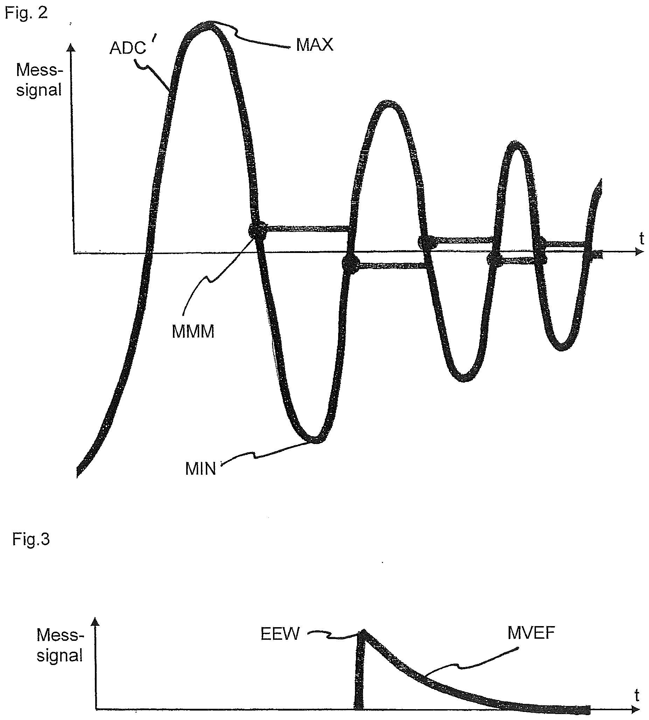

Im Folgenden wird mit Bezug auf Fig. 2 eine zweite Ausführungsform der vorliegenden Erfindung beschrieben.

Fig. 2 zeigt ein Messsignal ADC', das zwischen zwei Pegeln schwankt, beim Einschwingen ein Überschwingen zeigt, jedoch anschließend ein bzgl. der ersten Ausführungsform langsameres abklingendes Einschwingverhalten aufweist. Dies ist dann der Fall, wenn die durch den Überschwinger eingebrachte Energie groß ist und die Verluste während der Schwingungen klein sind. In diesem Fall dauert es aufgrund der hohen Restwelligkeit (verbleibender Wechselspannungsanteil im niedrigen Frequenzbereich) mit konventioneller Filtertechnik sehr lange bis die Amplitude dieser Schwingung kleiner wird. Es stellt sich ein Schwingungszustand ein, der, nach dem Abklingen des Überschwingens, eine langsam abnehmende periodische Schwingung darstellt, die der Eigenfrequenz des Messsystems entspricht. Diesen Umstand macht sich die Signalverarbeitung gemäß der zweiten Ausführungsform zu Nutze, indem sie im Rahmen einer ersten schwachen Vorfilterung die jeweiligen Maxima MAX und Minima MIN bzgl. der Amplitude des Messsignals berechnet und daraus einen Mittelwert MMM bildet. Der Verlauf dieses Mittelwerts entspricht dem Vorfilterausgangssignal und wird durch ein erstes Stillstandskriterium SK1' überwacht, welches dem ersten Stillstandskriterium SK1 ähnlich ist, jedoch andere Eckdaten aufweist. Im Idealfall einer gedämpften periodischen Schwingung, ist deren Mittelwert MMM konstant und entspricht dem statischen Wert um den herum diese Schwingung stattfindet, also bzgl. Fig. 2 der t-Achse.

Es werden also wie bei der ersten Ausführungsform die Ausgangssignale des Vorfilters VF' (Mittelwertbildung) und des Starkfilters SF' (nicht gezeigt) gleichzeitig berechnet. Der Verlauf des Ausgangssignals des adaptiven Filters besteht darin, dass er in der ersten Zeitspanne S1' identisch ist mit dem Starkfilter, nach Erreichen des Ersterfassungswertes EEW', also zu Beginn der zweiten Zeitspanne S2', die Zwischenwerte der Filterberechnung gemäß dem Starkfilter jedoch überschrieben werden mit den der Ersterfassung entsprechenden Werten, das adaptive Filter also einen Umstieg vollzogen hat und ab diesem Zeitpunkt, im Verlauf der zweiten Zeitspanne S2' als starkes Filter weiterarbeitet (siehe Fig. 1b).

Im Folgenden wird mit Bezug auf Fig. 3 eine dritte Ausführungsform der vorliegenden Erfindung beschrieben.

Fig. 3 zeigt einen mittleren Verlauf eines Erfassungsfehlers. Ausgehend von einem Messvorgang gemäß der ersten oder zweiten Ausführungsform wird hier iterativ eine lernfähige Korrektur des Messsignals vorgenommen, um den Erfassungsfehler zu kompensieren. Dabei werden der Ersterfassungswert EEW sowie der zeitliche Verlauf des erfassten Messwerts gespeichert. Daraus wird, über mehrere Messungen hinweg, ein mittlerer Verlauf des Erfassungsfehlers MVEF, bis hin zu einem statischen Endwert gebildet. Bei jeder weiteren Messung wird dann, ab dem Vorliegen des Ersterfassungswerts EEW, ein, dem zeitlichen Verlauf entsprechender, Wert vom Messwert subtrahiert und somit korrigiert. Der unkorrigierte Verlauf des Erfassungswertes geht wiederum in die Berechnung des mittleren Verlaufs des Erfassungsfehlers MVEF ein. Durch das ständige Neuberechnen des mittleren Verlaufs des Erfassungsfehlers MVEF passt sich dieser dem aktuellen Verhalten der Messanordnung und der Messbedingungen an. Die Korrektur und das Verhalten der Wägesignalverarbeitung sind somit lernfähig.

Eine Vorrichtung zur Signalverarbeitung, z.B. zum Einsatz in einer Waage oder einem Wägesystem (Mehrkopfwaage, Kombinationswaage), umfasst beispielsweise eine Messsignalerfassungseinrichtung, die einen Aufnehmer, einen Verstärker und eine Pegelanpassung aufweist, eine Messsignalwandlereinrichtung, wie einen Analog-Digital-Wandler, und eine Prozessoreinheit für Signalverarbeitung mit einem ersten Filter und/oder einem zweiten Filter und/oder einem adaptiven Filter und/oder einer Korrektureinrichtung.

## Patentansprüche

1. Signalverarbeitungsverfahren zur Ermittlung eines Messwerts bei dem ein Messsignal (ADC, ADC') in einer ersten Zeitspanne (S1, S1') bis zum Erreichen eines ersten Stillstandskriteriums (SK1, SK1') durch ein erstes digitales Filter und ein zweites digitales Filter gefiltert wird, wobei
die Eckfrequenz des ersten digitalen Filters höher ist als die Eckfrequenz des zweiten digitalen Filters und/oder die Ordnung des ersten digitales Filters niedriger ist als die Ordnung des zweiten digitalen Filters, wobei nach dem Erreichen des ersten Stillstandskriteriums (SK1, SK1') ein Filterumstieg auf ein adaptives drittes Filter veranlasst wird und nach dem Erreichen eines zweiten Stillstandskriteriums (SK2, SK2') ein endgültiger Messwert ausgegeben wird, wobei die Ausgangswerte des ersten digitalen Filters und des zweiten digitalen Filters gleichzeitig berechnet werden und das adaptive dritte Filter dadurch gebildet wird, dass
die Ausgangswerte des zweiten digitalen Filters mit den Werten des ersten digitalen Filters überschrieben werden und dadurch das adaptive dritte Filter ab diesem Zeitpunkt im Verlauf einer zweiten Zeitspanne (S2) als starkes Filter weiterarbeitet,
oder das adaptive dritte Filter dadurch gebildet wird,
dass das erste digitale Filter ab Beginn der zweiten Zeitspanne (S2) mit den Filterkoeffizienten des zweiten digitalen Filters weiterberechnet wird.

2. Signalverarbeitungsverfahren gemäß Anspruch 1, wobei das Stillstandskriterium (SK1, SK2) darin besteht, dass ein Gut-Zähler inkrementiert sobald die Differenz zwischen dem aktuellen Messsignal-Wert und einem vorhergehenden Messsignal-Wert kleiner ist als ein erster Sockelbetrag.

3. Signalverarbeitungsverfahren gemäß Anspruch 2, wobei der Gut-Zähler dekrementiert, sobald die Differenz zwischen dem aktuellen Messsignal-Wert und einem vorhergehenden Messsignal-Wert größer ist als der erste Sockelbetrag.

4. Signalverarbeitungsverfahren gemäß Anspruch 2, wobei der Gut-Zähler auf Null gesetzt wird, sobald die Differenz zwischen dem aktuellen Messsignal-Wert und einem vorhergehenden Messsignal-Wert größer ist als der erste Sockelbetrag.

5. Signalverarbeitungsverfahren gemäß einem der Ansprüche 1 bis 4, wobei das Stillstandskriterium (SK1, SK1', SK2, SK2') erfüllt ist, sobald ein festgelegter Wert erreicht ist.

6. Signalverarbeitungsverfahren gemäß Anspruch 1, wobei das Messsignal (ADC') in der ersten Zeitspanne (S1') bis zum Erreichen des ersten Stillstandskriteriums (SK1') durch das erste digitale Filter gefiltert wird, derart dass für jede Periode des Messsignals (ADC') ein Maximum (MAX), ein Minimum (MIN) und ein aus dem Maximum (MAX) und dem Minimum (MIN) resultierender Mittelwert (MMM) bestimmt wird.

7. Signalverarbeitungsverfahren gemäß Anspruch 6, wobei das Stillstandskriterium (SK1', SK2') darin besteht, dass ein Gut-Zähler inkrementiert sobald die Differenz zwischen dem letzten berechneten Mittelwert (MMM) und einem vorhergehenden Mittelwert (MMM) kleiner ist als ein zweiter Sockelbetrag.

8. Signalverarbeitungsverfahren gemäß Anspruch 7, wobei der Gut-Zähler dekrementiert sobald die Differenz zwischen dem letzten berechneten Mittelwert (MMM) und einem vorhergehenden Mittelwert (MMM) größer ist als der zweite Sockelbetrag.

9. Signalverarbeitungsverfahren gemäß Anspruch 7, wobei der Gut-Zähler auf Null gesetzt wird sobald die Differenz zwischen dem letzten berechneten Mittelwert (MMM) und einem vorhergehenden Mittelwert (MMM) größer ist als der zweite Sockelbetrag.

10. Signalverarbeitungsverfahren gemäß einem der Ansprüche 6 bis 9, wobei das Stillstandskriterium (SK1', SK2') erfüllt ist, sobald ein festgelegter Wert erreicht ist.

11. Signalverarbeitungsverfahren gemäß einem der Ansprüche 3 oder 8 , wobei das Inkrementieren mit einem festgelegten Inkrement und das Dekrementieren mit einen festgelegten Dekrement erfolgt.

12. Signalverarbeitungsverfahren bei dem über eine Mehrzahl von Messungen gemäß dem Verfahren gemäß einem der Ansprüche 1 bis 11 ein zeitlicher Verlauf des erfassten Wertes von einem Ersterfassungswert (EEW) bis zu einem quasistatischen Wert gemessen wird, wobei
aus dem quasistatischen Wert ein mittlerer Verlauf des Erfassungsfehlers (MVEF) berechnet wird und wobei
bei jeder Messung, ab dem Vorliegen des Ersterfassungswerts (EEW), vom Messergebnis ein, dem zeitlichen Verlauf entsprechender Wert abgezogen und somit korrigiert wird.

13. Signalverarbeitungsverfahren gemäß Anspruch 12, wobei die Korrektur nach einem vom Messvorgang unabhängigen, festgelegten Größenverlauf durchgeführt wird.

14. Signalverarbeitungsverfahren gemäß einem der Ansprüche 1 bis 13, wobei ein Wägesignal verarbeitet wird.

15. Vorrichtung zur Signalverarbeitung, mit einer Messsignalerfassungseinrichtung, einer Messsignalwandlereinrichtung und einer Prozessoreinheit für Signalverarbeitung, wobei die Vorrichtung derart ausgebildet ist, dass sie das Verfahren gemäß einem der Ansprüche 1 bis 14 ausführen kann.

16. Waage mit einer Vorrichtung gemäß Anspruch 15.

17. Waage gemäß Anspruch 16, wobei die Waage eine Kombinationswaage ist.

## Claims

1. Signal processing method for acquisition of a measured value, wherein a measurement signal (ADC, ADC') is filtered by a first digital filter and a second digital filter in a first period (S1, S1') up to reaching a first standstill criterion (SK1, SK1'), wherein
the limit frequency of the first digital filter is higher than the limit frequency of the second filter and/or the order of the first digital filter is lower than the order of the second digital filter, wherein after reaching the first standstill criterion (SK1, SK1') a filter change to a adaptive third filter is initiated and after reaching a second standstill criterion (SK2, SK2') a final measured value is output,
wherein the output signals of the first digital filter and of the second digital filter are calculated simultaneously and the adaptive third filter is formed in that the output values of the second digital filter are overwritten with the values of the first digital filter, and thereby, the adaptive third filter acts as strong filter from that point of time during a second time span (S2) or the adaptive third filter is formed in that the first digital filter is further calculated with the filter coefficients of the second digital filter from the beginning of the second time span (S2).

2. Signal processing method according to claim 1, wherein the standstill criterion (SK1, SK2) is such, that an acceptance counter increments as soon as the difference between the effective measurement signal value and a previous measurement signal value is smaller than a first basic amount.

3. Signal processing method according to claim 2, wherein the acceptance counter decrements as soon as the difference between the effective measurement signal value and a previous measurement signal value is larger than the first basic amount.

4. Signal processing method according to claim 2, wherein the acceptance counter is set to zero, as soon as the difference between the effective measurement signal value and a previous measurement signal value is larger than the first basic amount.

5. Signal processing method according to one of the claims 1 to 4, wherein the standstill criterion (SK1, SK1', SK2, SK2') is fulfilled as soon as a determined value is reached.

6. Signal processing method according to claim 1, wherein the measurement signal (ADC') in the first time span (S1') is filtered by the first filter up to reaching the first standstill criterion (SK1'), such that for every period of the measurement signal (ADC') a maximum (MAX), a minimum (MIN) and an average value (MMM) resulting from the maximum (MAX) and the minimum (MIN) is calculated.

7. Signal processing method according to claim 6, wherein the standstill criterion (SK1', SK2') is such that an acceptance counter increments as soon as the difference between the last calculated average value (MMM) and a previous average value (MMM) is smaller than a second basic amount.

8. Signal processing method according to claim 7, wherein the acceptance counter decrements as soon as the difference between the last calculated average value (MMM) and a previous average value (MMM) is larger as the second basic amount.

9. Signal processing method according to claim 7, wherein the acceptance counter is set to zero as soon as the difference between the last calculated average value (MMM) and a previous average value (MMM) is larger than the second basic amount.

10. Signal processing method according to the claims 6 to 9, wherein the standstill criterion (SK1', SK2') is fulfilled as soon as a determined value is reached.

11. Signal processing method according to the claims 3 or 8, wherein the incrementing takes place with a determined increment and the decrementing takes place with a determined decrement.

12. Signal processing method, wherein according to the method according to one of the claims 1 to 11, a temporal course from the acquired value of an initial acquisition value (EEW) up to a quasi-static value is calculated over a plurality of measurements, wherein
an average progression of the acquisition error (MVEF) is calculated from the quasi-static value, and wherein
during every measurement, from the presence of the initial acquisition value (EEW), a value corresponding to the temporal course is subtracted from the measurement result and is hence corrected.

13. Signal processing method according to claim 12, wherein the correction is performed according to a determined size progression which is independent from the measurement procedure.

14. Signal processing method according to one of the claims 1 to 13, wherein a weighing signal is processed.

15. Device for signal processing having a measurement signal acquisition device, a measurement signal converter device and a processor unit for signal processing, wherein the device is formed in a way that it is capable of executing the method according to one of the claims 1 to 14.

16. Weighing machine with a device according to claim 15.

17. Weighing machine according to claim 16, wherein the weighing machine is a combination weighing machine.

## Revendications

1. Procédé de traitement de signaux servant à déterminer une valeur de mesure, dans lequel un signal de mesure (ADC, ADC') est filtré par un premier filtre numérique et un deuxième filtre numérique dans un premier laps de temps (S1, S1') jusqu'à atteindre un premier critère d'arrêt (SK1, SK1'), dans lequel
la fréquence de coupure effective du premier filtre numérique est plus élevée que la fréquence de coupure effective du deuxième filtre numérique et/ou le rang du premier filtre numérique est inférieur au rang du deuxième filtre numérique, dans lequel une fois le premier critère d'arrêt (SK1, SK1') atteint, un changement de filtre sur un troisième filtre adaptatif est provoqué et, une fois un deuxième critère d'arrêt (SK2, SK2') atteint, une valeur de mesure définitive est émise, dans lequel les valeurs de sortie du premier filtre numérique et du deuxième filtre numérique sont calculées de manière simultanée et le troisième filtre adaptatif est formé par le fait que
les valeurs de sortie du deuxième filtre numérique sont écrasées par les valeurs du premier filtre numérique, et
par le fait que le troisième filtre adaptatif est traité ultérieurement comme un filtre fort à partir de ce moment au cours d'un deuxième laps de temps (S2),
ou le troisième filtre adaptatif est formé par le fait
que le premier filtre numérique est calculé ultérieurement, dès le début du deuxième laps de temps (S2), avec les coefficients de filtre du deuxième filtre numérique.

2. Procédé de traitement de signaux selon la revendication 1, dans lequel le critère d'arrêt (SK1, SK2) consiste en ce qu'un compteur d'articles effectue une incrémentation une fois que la différence entre la valeur de signal de mesure instantanée et une valeur de signal de mesure précédente est inférieure à un premier montant de base.

3. Procédé de traitement de signaux selon la revendication 2, dans lequel le compteur d'articles effectue une décrémentation une fois que la différence entre la valeur de signal de mesure instantanée et une valeur de signal de mesure précédente est supérieure au premier montant de base.

4. Procédé de traitement de signaux selon la revendication 2, dans lequel le compteur d'articles est réglé sur zéro une fois que la différence entre la valeur de signal de mesure instantanée et une valeur de signal de mesure précédente est supérieure au premier montant de base.

5. Procédé de traitement de signaux selon l'une quelconque des revendications 1 à 4, dans lequel le critère d'arrêt (SK1, SK1', SK2, SK2') est rempli une fois qu'une valeur fixée est atteinte.

6. Procédé de traitement de signaux selon la revendication 1, dans lequel le signal de mesure (ADC') est filtré par le premier filtre numérique dans le premier laps de temps (S1') jusqu'à atteindre le premier critère d'arrêt (SK1') de telle manière que pour chaque période du signal de mesure (ADC'), un maximum (MAX), un minimum (MIN) et une valeur moyenne (MMM) résultant du maximum (MAX) et du minimum (MIN) sont définis.

7. Procédé de traitement de signaux selon la revendication 6, dans lequel le critère d'arrêt (SK1', SK2') consiste en ce qu'un compteur d'articles effectue une incrémentation une fois que la différence entre la dernière valeur moyenne (MMM) calculée et une valeur moyenne (MMM) précédente est inférieure à un deuxième montant de base.

8. Procédé de traitement de signaux selon la revendication 7, dans lequel le compteur d'articles effectue une décrémentation une fois que la différence entre la dernière valeur moyenne (MMM) calculée et une valeur moyenne (MMM) précédente est supérieure au deuxième montant de base.

9. Procédé de traitement de signaux selon la revendication 7, dans lequel le compteur d'articles est réglé sur zéro une fois que la différence entre la dernière valeur moyenne (MMM) calculée et une valeur moyenne (MMM) précédente est supérieure au deuxième montant de base.

10. Procédé de traitement de signaux selon l'une quelconque des revendications 6 à 9, dans lequel le critère d'arrêt (SK1', SK2') est rempli une fois qu'une valeur fixée est atteinte.

11. Procédé de traitement de signaux selon l'une quelconque des revendications 3 ou 8, dans lequel l'incrémentation est réalisée avec un incrément fixé et la décrémentation est réalisée avec un décrément fixé.

12. Procédé de traitement de signaux, dans lequel une évolution dans le temps de la valeur détectée est mesurée depuis une valeur de première détection (EEW) jusqu'à une valeur quasi statique par l'intermédiaire d'une multitude de mesures selon le procédé selon l'une quelconque des revendications 1 à 11, dans lequel
une évolution moyenne de l'erreur de détection (MVEF) est calculée à partir de la valeur quasi statique et dans lequel
pour chaque mesure, à compter de la présence de la valeur de première détection (EEW), une valeur correspondant à l'évolution dans le temps est extraite du résultat de mesure et est ainsi corrigée.

13. Procédé de traitement de signaux selon la revendication 12, dans lequel la correction est mise en oeuvre après une évolution de grandeurs fixée indépendante de l'opération de mesure.

14. Procédé de traitement de signaux selon l'une quelconque des revendications 1 à 13, dans lequel un signal de pesage est traité.

15. Dispositif servant à traiter des signaux, avec un système de détection de signaux de mesure, un système de conversion de signaux de mesure et une unité de processeur pour le traitement de signaux, dans lequel le dispositif est réalisé de telle manière qu'il peut exécuter le procédé selon l'une quelconque des revendications 1 à 14.

16. Balance avec un dispositif selon la revendication 15.

17. Balance selon la revendication 16, dans laquelle la balance est une balance combinatoire.
